# EUROPEAN PATENT SPECIFICATION

(11) **EP 2 856 042 B1**
(45) Date of publication and mention of the grant of the patent: **31.08.2016**
(21) Application number: 13729794.1
(22) Date of filing: 16.05.2013
(51) Int. Cl.: F25B 1/00, F25B 21/02, F25B 29/00, F25B 49/02

(54) **ENERGY RECOVERY APPARATUS**
ENERGIERÜCKGEWINNUNGSVORRICHTUNG
APPAREIL DE RÉCUPÉRATION D'ÉNERGIE

(30) Priority: 25.05.2012 GB 201209233
(43) Date of publication of application: 08.04.2015
(73) Proprietor: Elsarrag, Esam, Doha (QA); Al-Horr, Yousef, Doha (QA)
(72) Inventor: Elsarrag, Esam, Doha (QA); Al-Horr, Yousef, Doha (QA)
(74) Representative: Gaunt, Thomas Derrick
(86) International application number: PCT/GB2013/051265
(87) International publication number: WO 2013/175179

(56) References cited:
- GB-A- 2 102 551
- US-A- 4 535 603
- US-A- 4 879 879
- US-A1- 2007 101 737
- US-B1- 6 272 871

## Description

The present invention relates to an energy recovery apparatus used in conjunction with refrigeration, heating, ventilation and air-conditioning (HVAC) systems.

Refrigeration, heating, ventilation and air-conditioning (HVAC) systems are used to both heat and cool local environments. They however require significant energy to drive them, and inevitably energy is lost in the processes used to heat, ventilate and air-condition. The present invention is in this respect directed towards recovering and harvesting the energy lost in such processes.

According to the present invention there is provided an apparatus according to claim 1.

The apparatus preferably further comprises an absorption chiller coupled to the thermal store.

Preferably, the thermoelectric module is provided in the form of a lining provided around an inner surface of the liquid tank.

US 2007/0101737 discloses a vapor-compression circuit for conditioning a space according to the preamble of claim 1. Excess heat generated in the vapor-compression circuit may be utilized to generate an electric current that may power other components of the vapor-compression circuit. A thermoelectric device may be placed in heat-transferring contact with the excess heat and generate the electrical current, which may then be used to power another thermoelectric device to provide further cooling or heating to supplement the vapor-compression circuit and the conditioning of the space.

GB 2 102 551 discloses a refrigeration circuit of a domestic appliance, such as a refrigerator or freezer, which is provided with means whereby heat is recovered and used to make hot water available for domestic purposes. The condenser includes, in addition to the normal air-cooled condenser coil, a further condenser coil housed in a tank of water which is in close contact with the compressor. Valve means are provided which enable the relative flow of refrigerant through the two condenser coils to be controlled to regulate the amount of heat given up to the water in the tank by the further condenser coil.

An Illustrative embodiment of the present invention will now be described with reference to the accompanying drawings, in which:
Figure 1 shows an illustrative heat pump arrangement having an energy recovery collector provided in a condenser;
Figure 2 shows an embodiment of the present invention with an energy recovery collector provided between a compressor and condenser;
Figure 3 shows an illustrative heat pump arrangement having an energy recovery collector provided in a heat exchanger provided between outlets of a condenser and an evaporator;
Figure 4 shows an illustrative heat pump arrangement having an energy recovery collector provided adjacent an evaporator in a flat plate arrangement;
Figure 5 shows an illustrative heat pump arrangement having an energy recovery collector provided adjacent an evaporator in a heat pipe arrangement; and
Figure 6 shows an illustrative heat pump arrangement having an energy recovery collector provided in solar plate arrangement.

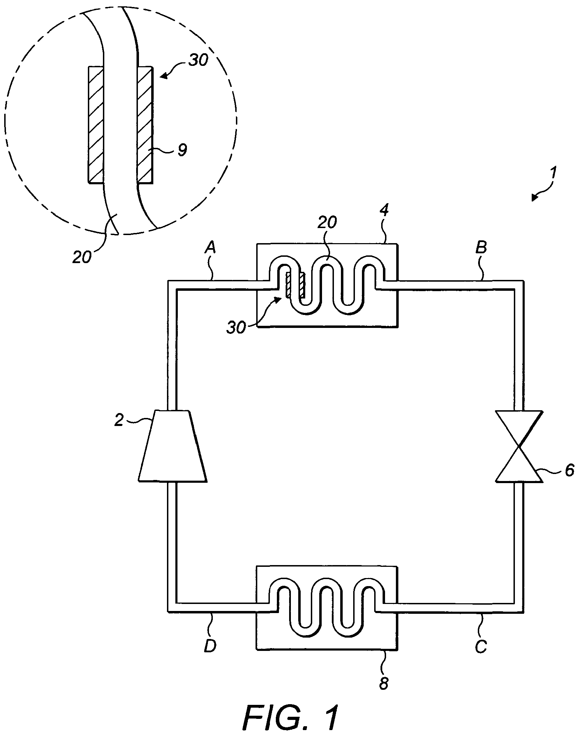

Figure 1 shows a HVAC system comprising a heat pump 1 which supports a typical vapour compression refrigeration cycle. The heat pump 1 comprises a compressor 2, a condenser 4, an expansion valve 6 and an evaporator 8. These four components are connected by fluid passages in the respective order forming parts of a cyclic thermodynamic structure to circulate a refrigerant around the heat pump 1. The fluid passages may be tubes, pipes and/or coils or any other suitable coupling between the elements of the heat pump 1.

In a conventional refrigeration cycle, the refrigerant adopts different states as it goes through each of the four components. As indicated in the Figure 1, at A the refrigerant is in a gaseous state having a high temperature and a high pressure where hot gaseous refrigerant needs to be cooled before condensation. The gaseous refrigerant then enters the condenser 4.

The condenser 4 precipitates the high temperature and high pressure gas to a high temperature and a high pressure liquid by transferring heat to a lower temperature medium, such as ambient air. The refrigerant at B is in a liquid state having a high temperature and high pressure. During the refrigeration cycle, the refrigerant goes through a subcooling process at the condenser 4 or at stage B so that the refrigerant is changed to a complete liquid state. Subcooling involves cooling the refrigerant below its saturation temperature and forcing the refrigerant to change its phase completely. This allows the refrigerant to effectively undergo the remaining stages of the refrigeration cycle. The high temperature liquid refrigerant then enters the expansion valve 6.

In the expansion valve 6, the pressure decreases abruptly, causing a partial evaporation and an autorefrigeration. When this happens at least some portion of the high temperature liquid turns into gaseous form. This mixture of gas and liquid refrigerant at C has a low temperature and a low pressure. Only a limited amount of the resulting refrigerant is allowed to flow into the evaporator 8.

The evaporator 8 then expands the refrigerant so that the refrigerant vapourises which results in cooling of the warm air from the space being refrigerated. The warm air may be blown by a fan (not shown) across the evaporator 8. The resulting superheated refrigerant at D then returns to the compressor 4, completing the refrigeration cycle.

Figure 1 shows apparatus in the form of a heat pump 1. As shown, the condenser 4 of the heat pump 1 has an inlet where the high temperature vapour refrigerant (A) enters. The condenser 4 further comprises a passage 20 which has an energy recovery unit 30 located at the passage 20. The refrigerant travels through the passage 20. The passage 20 may be coil and the energy recovery unit 30 may comprise a thermoelectric material 9 which is capable of handling low grade heat.

Operation of the illustrative arrangement of Figure 1 will now be described. Figure 1 illustrates recovering energy which could have been lost whilst the refrigerant goes through the condenser 4. A superheated refrigerant enters the compressor 2 where the pressure increases. Then hot vapour refrigerant from the compressor 2 enters the condenser 4. By entering the phase of condensing and subcooling the excessive heat is removed from the gaseous refrigerant (A) by releasing the unnecessary heat into a lower temperature medium, such as the surrounding atmosphere. This creates a heat sink surrounding the passage 20 containing the refrigerant. The energy recovery unit 30 located at the passage 20 then recovers the low grade heat (waste heat) from the heat sink and converts the thermal energy into electricity by way of the thermoelectric material. This electricity is collected and channelled by electrical cabling (not shown)to be stored and/or to be used.

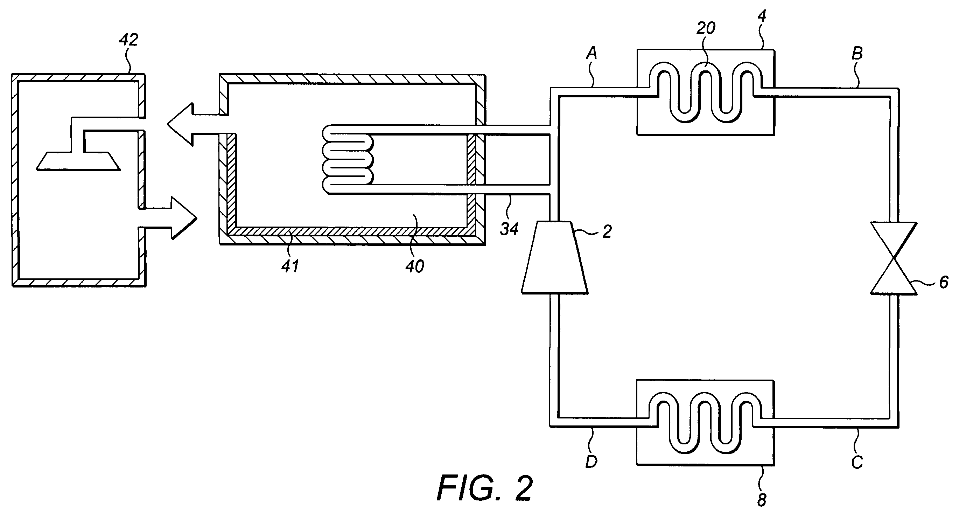

Figure 2 shows a heat pump 1 according to an embodiment of the present invention. The heat pump 1 further comprises a thermal store 40. The thermal store 40 is filled with a suitable liquid such as water, and disposed between the compressor 2 and the condenser 4.

A thermoelectric module 41 is located at the walls of a thermal store 40. The module 41 may be provided in the form of a lining, provided around an inner surface of the thermal store. The thermoelectric lining is electrically coupled (not shown) to suitable electrical circuitry. The thermal store 40 may further be connected to an absorption chiller 42.

Operation of the embodiment of the present invention will now be described. Water is stored in a tank like structure 40 and the refrigerant passage 34, at A is inserted into the thermal store 40. The refrigerant passage 34 may be a tube, pipe or coil which is made of thermal conductive material. The refrigerant at A is hot vapour with high pressure after absorbing heat at the evaporation and at the compression stages. By going through the passage 34 the low grade heat released from the refrigerant is absorbed by the water. The water is warmed by the thermal energy which would have otherwise been wasted in the ambient air.

This hot water can be used directly. Furthermore, the thermoelectric module 41 surrounding the hot water will convert the thermal energy into electricity. The heat rejected by the system can therefore be used to produce both hot water and electricity minimising energy loss.

If the hot water is not required, then the hot water can power an absorption/adsorption chiller 42 or desiccant dehumidifier which is coupled to the thermal store 40. The absorption chiller 42 is used to aid cooling. Therefore, the heat pump 1 enhances refrigeration by tri-generation to recover most of energy which may otherwise have lost and wasted to the ambient atmosphere.

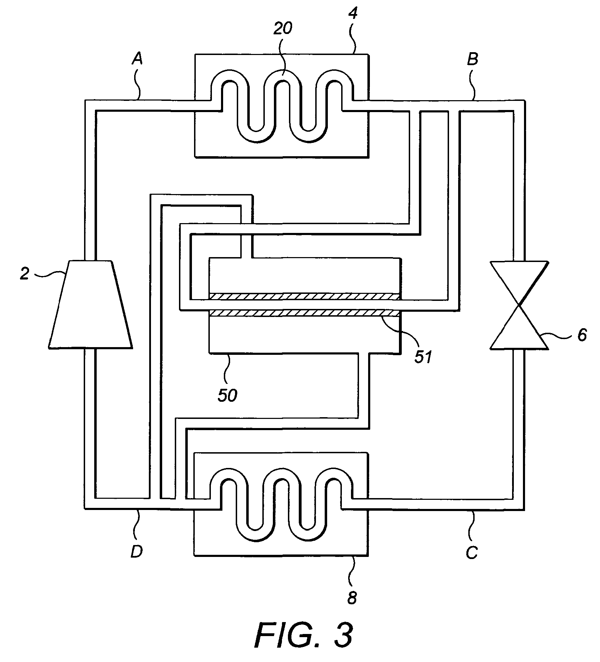

Figure 3 shows another illustrative heat pump 1 arrangement. As shown, the heat pump 1 further comprises a heat exchanger 50 which has a thermoelectric module 51 disposed within the heat exchanger 50. The heat exchanger 50 is placed between B where subcooled the liquid refrigerant flows and D where the superheated gaseous refrigerant flows. The heat exchanger 50 is configured so that the liquid refrigerant from B flows along the length of the passage within the heat exchanger 50 and the gaseous refrigerant from D enters from and leaves by the sides of the passage. The gaseous refrigerant flows in opposite direction from the liquid refrigerant.

Operation of the illustrative heat pump 1 arrangement of Figure 3 will now be described. Heat exchanger 50 is placed between B and D where the refrigerant is most affected by the subcooling and superheating processes. The heat exchanger works because of the similarity of subcooling and superheating and the operation of the processes being inverse of each other. By allowing heat to flow from the refrigerant at a higher pressure (liquid at B) to the one with lower pressure (gas at D) an energetic equivalence can be created between the two processes. In general, the fluid being subcooled is hotter than the refrigerant being superheated. Therefore the energy flux is in the required direction and enables the energy exchange between the two processes by coupling the processes with an internal heat exchanger 50.

By placing the thermoelectric module 51 within the heat exchanger 50, it is possible to convert the heat exchange between the subcooling and superheating into electricity.

The thermoelectric heat exchanger 50 may comprise a thin or thick film and cooled by fluid.

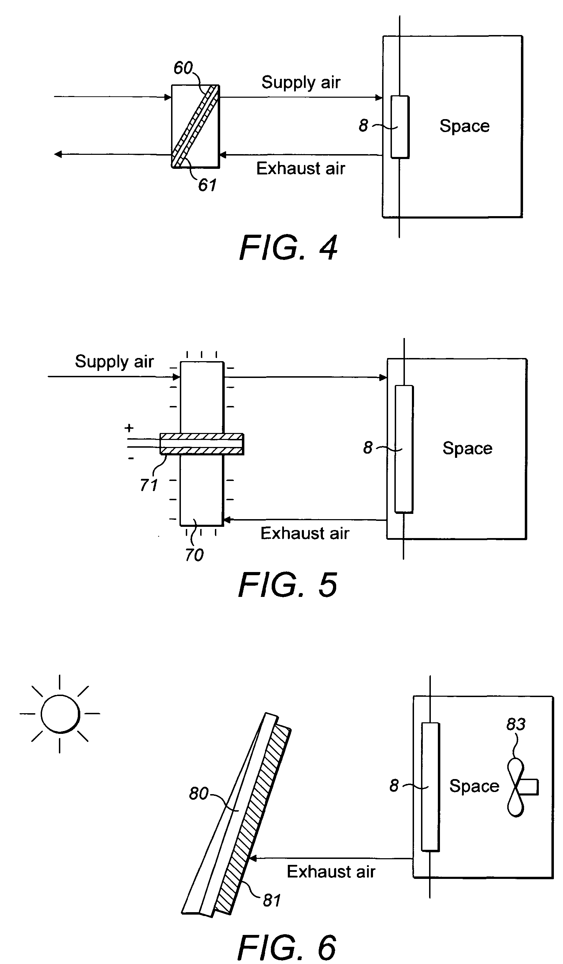

Figure 4 shows an illustrative heat & refrigeration & air conditioning system 1. As shown in Figure 4, the system comprises a flat plate 60 adjacent to the space which is being air conditioned and as such adjacent the evaporator 8. In order to warm or cool the space, supply of fresh air and removal of the air from the space is required. This air flow is directed over the flow plate and its thermoelectric module 61 in order to generate electricity.

Figure 5 shows another illustrative arrangement having a similar configuration to that of Figure 4, in this case with a heat pipe 70 having a thermoelectric module 71.

Figure 6 shows another illustrative arrangement, where the exhaust air is directed via a fan 83 past the evaporator 8 and across a solar plate 80 to boost the thermoelectric generation of module 81.

It will be understood that the described embodiment relates to a preferred example of the invention and that the present invention encompasses variants that fall within the scope of the appended claims.

## Claims

1. Apparatus comprising:
a heat pump (1) comprising a condenser (4), a compressor (2), an expansion valve (6), an evaporator (8), and refrigerant carrying passages (20,34) connecting there between; and
a low grade energy collector provided between the compressor (2) and the condenser (4), and comprising a thermoelectric module (41) for generating electricity,
**characterised in that** the low grade energy collector comprises a thermal store (40) having a liquid tank, wherein the refrigerant carrying passage (34) connected between the compressor (2) and the condenser (4) is directed through the liquid tank for transferring low grade heat from the refrigerant therein to liquid stored in the tank, the thermal store (40) further comprising the thermoelectric module (41) located in the walls of the liquid tank for generating electricity from thermal energy released by liquid stored in the tank.

2. Apparatus according to claim 1, further comprising an absorption chiller (42) coupled to the thermal store (40).

3. Apparatus according to claim 1 or 2, wherein the thermoelectric module (41) is provided in the form of a lining provided around an inner surface of the liquid tank.

## Patentansprüche

1. Eine Vorrichtung, die Folgendes aufweist:
eine Wärmepumpe (1), die einen Kondensator (4), einen Kompressor (2), ein Expansionsventil (6), einen Verdampfer (8) und kühlmittelführende Kanäle (20,34) als Verbindung dazwischen aufweist; und
einen niedriggradigen Energiekollektor, der zwischen dem Kompressor (2) und dem Kondensator (4) angebracht ist, und ein thermoelektrisches Modul (41) für die Stromerzeugung aufweist,
**gekennzeichnet dadurch, dass** der niedriggradige Energiekollektor einen Wärmespeicher (40) mit einem Flüssigkeitsbehälter aufweist, wobei der kühlmittelführende Kanal (34), der zwischen dem Kompressor (2) und dem Kondensator (4) angeschlossen ist, durch den Flüssigkeitsbehälter verläuft, um schwache Wärme vom darin befindlichen Kühlmittel zu der im Behälter gespeicherten Flüssigkeit zu übertragen, der Wärmespeicher (40) weist darüberhinaus das thermoelektrische Modul (41) auf, das an den Wänden des Flüssigkeitsbehälters positioniert ist, um Elektrizität aus der Wärmeenergie, die von der im Behälter gespeicherten Flüssigkeit abgegeben wird, zu erzeugen.

2. Eine Vorrichtung gemäß Anspruch 1, die darüberhinaus eine Absorptionskälteanlage (42) aufweist, die mit dem Wärmespeicher (40) gekoppelt ist.

3. Eine Vorrichtung gemäß Anspruch 1 oder 2, wobei das thermoelektrische Modul (41) in der Form einer Beschichtung um die Innenfläche des Flüssigkeitsbehälters bereitgestellt wird.

## Revendications

1. Appareil comprenant :
une pompe à chaleur (1) comprenant un condenseur (4), un compresseur (2), un détendeur (6), un évaporateur (8) et des passages transportant le fluide frigorigène (20,34) raccordés entre eux ; et
un collecteur d'énergie de qualité inférieure fourni entre le compresseur (2) et le condenseur (4) et comprenant un module thermoélectronique (41) destiné à la production d'électricité,
**caractérisé en ce que** le collecteur d'énergie de qualité inférieure comprend un accumulateur thermique (40) présentant un réservoir de liquide, dans lequel le passage transportant le fluide frigorigène (34) connecté entre le compresseur (2) et le condenseur (4) est dirigé à travers le réservoir de liquide destiné au transfert de la chaleur de qualité inférieure depuis le fluide frigorigène dans celui-ci vers le liquide stocké dans le réservoir, l'accumulateur thermique (40) comprenant en outre le module thermoélectrique (41) situé dans les parois du réservoir de liquide destiné à la production d'électricité à partir de l'énergie thermique libérée par le liquide stocké dans le réservoir.

2. Appareil selon la revendication 1, comprenant en outre un refroidisseur à absorption (42) couplé à l'accumulateur thermique (40).

3. Appareil selon la revendication 1 ou la revendication 2, dans lequel le module thermoélectrique (41) est fourni sous la forme d'une chemise fournie autour d'une surface intérieure du réservoir de liquide.
